# EUROPEAN PATENT APPLICATION

(11) **EP 2 940 939 A1**
(43) Date of publication of application: **04.11.2015**
(21) Application number: 14166443.3
(22) Date of filing: 29.04.2014
(51) Int. Cl.: H04L 12/58

(54) **Method for an enhanced and flexible converged messaging functionality of a mobile communication network, system, mobile communication network, and converged messaging application**

(71) Applicant: Deutsche Telekom AG, 53113 Bonn (DE)
(72) Inventor: Wirths, Wolfgang, 53125 Bonn (DE); Habermann, Steffen, 57635 Fiersbach (DE)
(74) Representative: Schwöbel, Thilo K.

(57) **Abstract**

The invention relates to a method for enhanced and flexible converged messaging functionality of a mobile communication network, wherein the mobile communication network comprises a converged messaging application as well as a plurality of protocol mapping gateway nodes,
wherein the converged messaging application controls the treatment of messages of different mobile messaging technologies within the mobile communication network such that the converged messaging application provides - for messages of different mobile messaging technologies - at least:
-- storing,
-- forwarding, and
-- user availability handling

of the messages.

## Description

### BACKGROUND

The present invention relates inter alia to a method for an enhanced and flexible converged messaging functionality of a mobile communication network, wherein the mobile communication network comprises a converged messaging application as well as a plurality of protocol mapping gateway nodes.

Furthermore, the present invention relates to a system for an enhanced and flexible converged messaging functionality of a mobile communication network, wherein the system comprises a converged messaging application as well as a plurality of protocol mapping gateway nodes.

Additionally, the present invention relates to a telecommunications network for an enhanced and flexible converged messaging functionality, wherein the mobile communication network comprises a converged messaging application as well as a plurality of protocol mapping gateway nodes.

Furthermore, the present invention relates to a converged messaging application for an enhanced and flexible converged messaging functionality, wherein the mobile communication network comprises a converged messaging application as well as a plurality of protocol mapping gateway nodes.

The increasing use of mobile devices, such as cellular phones, smart phones, Machine-to-Machine (M2M) devices, and notebooks, is creating a corresponding increase in messages and other data sent through various mobile communication networks. Many mobile devices use Short Message Service (SMS) or Multimedia Messaging Service (MMS) to communicate messages to other devices, such as other mobile devices. SMS allows devices to send short messages (e.g., text messages) to other devices. SMS messages are typically limited to 160 7-bit characters (140 8-bit characters or 70 16-bit characters). Larger messages may be carried over SMS over networks based on standards defined by Third Generation Partnership Project (3GPP) such as GSM (Global System for Mobile Communications), EDGE (Enhanced Data Rates for GSM Evolution), GPRS (General Packet Radio Service), UMTS (Universal Mobile Telecommunications System), HSPA (High Speed Packet Access), LTE or further standards. These SMS messages are known as "concatenated SMS", "multipart SMS" or "segmented SMS". MMS is an another type of message, containing typically multimedia content (such as audio files and pictures) communicated between two or more mobile devices.

Communication systems that support SMS and MMS have been in operation for many years and represent a significant investment by telecommunication companies. However, many newer devices use different communication systems, such as IMS (IP Multimedia Subsystem). IMS defines a system for communicating multimedia messages and other services between/among devices. In some situations, these newer devices do not support the SMS and MMS messaging services. This presents a problem to users of these newer devices that want to communicate messages to and from users with older devices that only support SMS or MMS. This also presents a problem to telecommunication companies and other service providers that have significant investments in the equipment and infrastructure related to SMS and MMS. Therefore, it is desirable to provide methods and systems that allow the communication of different mobile device via different types of messages.

One example of such a convergence of different types of messaging is the OMA (Open Mobile Alliance) CPM (Converged IP Messaging) that is also related to the transition of messaging and voice capabilities from circuit switching technology to IP (Internet Protocol)-based technology.

However, such known approaches - relying mainly on the use of interworking functions to achieve interoperability - generally lack the possibility to provide a unique messaging service experience across a variety of mobile messaging technologies.

It is a further drawback of such known approaches that the introduced interworking functions process the cross service communication on service interworking level, i.e. CPM as well as the legacy services such as SMS and MMS are full operational services with its own service execution flow. Furthermore, such cross service interworking makes use of existing interworking or enabling interfaces, e.g. ESME, IP-SM interworking or MM7. This requires continuing support of a legacy service execution.

### SUMMARY

An object of the present invention is to provide a method for an enhanced and flexible converged messaging functionality of a mobile communication network
-- that is able to be maintained in a cost-effective manner (i.e. the number of co-existing service implementations should be reduced),
-- that provides services regarding different types of messages that gain from each other by means of allowing to use the handling of different types of messages as well as the cross service use regarding storing, forwarding, and user availability handling,

The object of the present invention is achieved by a method for an enhanced and flexible converged messaging functionality of a mobile communication network, wherein the mobile communication network comprises a converged messaging application as well as a plurality of protocol mapping gateway nodes, wherein the converged messaging application controls the treatment of messages of different mobile messaging technologies within the mobile communication network such that the converged messaging application provides - for messages of different mobile messaging technologies - at least:
-- storing,
-- forwarding, and
-- user availability handling
of the messages.

According to the present invention it is thereby advantageously possible to enable an enhanced and flexible converged messaging functionality of a mobile communication network in order to provide a unique messaging service experience across a variety of mobile messaging technologies

According to the present invention, the mobile communication network (used in the inventive method) is a mobile network, especially a public land mobile network, comprising an access network and a core network, for providing mobile communication services to mobile devices (or user equipments). Typically such a mobile communication network comprises a backbone, and a plurality of base station entities in order to provide mobile communication to user equipments.

Furthermore according to the present invention, it is preferred that the messages of different mobile messaging technologies are represented - in the communication between the converged messaging application and the protocol mapping gateway nodes - as normalized and abstracted message elements.

Thereby, it is advantageously possible to also handle "Over the top messaging services" (OTT services) such as e.g. skype, whatsapp, google hangout. Such services are based on their own protocol implementation. Each individual service logic can be enhanced flexibly and in a short time to market due to the fact that there are no direct inter dependencies to standardized implementation of other providers.

According to the present invention, it is advantageously possible that Over-the-top services can be provide with native interaction to other OTT services or standardized messaging services such as SMS, MMS or the like.

According to the present invention, it is furthermore advantageously possible to deploy OTT services in a comparably simple and efficient manner, despite the fact that, due to the nature of OTT services, by using non standardized communication protocols, the usage of each OTT service requires the deployment of a client implementation; however, such a (generally applicable) client implementation only needs to be provided once, namely with the converged messaging application.

It is furthermore preferred according to the present invention that the message elements together comprise the protocol and access specific signaling as well as the messaging logic of the messages of different mobile messaging technologies, wherein the protocol and access specific signaling and/or the messaging logic are especially represented in form of meta data accompanying the message element.

According to the present invention, it is preferred that in case of a particular incoming message of a first type, the converged messaging application provides for the delivery and/or for forwarding of the particular message to be sent as a message of a second type, wherein a first gateway node of the plurality of protocol mapping gateway nodes is used for the reception of the particular incoming message, and wherein a second gateway node of the plurality of protocol mapping gateway nodes is used for the delivery and/or for the forwarding of the particular message to be sent.

Furthermore, it is preferred according to the present invention that the converged messaging application centrally controls the treatment of messages of different mobile messaging technologies within the mobile communication network such that a modification of the treatment of messages of different mobile messaging technologies primarily requires a modification of the converged messaging application.

The present invention also relates to a system for an enhanced and flexible converged messaging functionality of a mobile communication network, wherein the system comprises a converged messaging application as well as a plurality of protocol mapping gateway nodes, wherein the converged messaging application is configured such as to control the treatment of messages of different mobile messaging technologies within the mobile communication network in a manner that the converged messaging application provides
- for messages of different mobile messaging technologies - at least:
   -- storing,
   -- forwarding, and
   -- user availability handling
   of the messages.

Additionally, the present invention also relates to a mobile communication network for an enhanced and flexible converged messaging functionality, wherein the mobile communication network comprises a converged messaging application as well as a plurality of protocol mapping gateway nodes, wherein the converged messaging application is configured such as to control the treatment of messages of different mobile messaging technologies within the mobile communication network in a manner that the converged messaging application provides
- for messages of different mobile messaging technologies - at least:
   -- storing,
   -- forwarding, and
   -- user availability handling
of the messages.

According to the present invention it is thereby advantageously possible to provide enhanced functionality regarding message handling across different message types.

Likewise, the other above mentioned advantages of the inventive method apply - mutatis mutandis - also to the inventive system and to the inventive mobile communication network.

According to the present invention - also with respect to the inventive system and to the inventive mobile communication network - it is preferred that the messages of different mobile messaging technologies are represented - in the communication between the converged messaging application and the protocol mapping gateway nodes - as normalized and abstracted message elements.

Furthermore according to the present invention - also with respect to the inventive system and to the inventive mobile communication network - it is preferred that the message elements together comprise the protocol and access specific signaling as well as the messaging logic of the messages of different mobile messaging technologies, wherein the protocol and access specific signaling and/or the messaging logic are especially represented in form of meta data accompanying the message element.

Additionally - also with respect to the inventive system and to the inventive mobile communication network - it is preferred that the converged messaging application is configured such that it centrally controls the treatment of messages of different mobile messaging technologies within the mobile communication network such that a modification of the treatment of messages of different mobile messaging technologies primarily requires a modification of the converged messaging application.

Furthermore, the present invention relates to a converged messaging application for an enhanced and flexible converged messaging functionality of a mobile communication network, wherein the converged messaging application is associated to a plurality of protocol mapping gateway nodes, wherein the converged messaging application is configured such as to control the treatment of messages of different mobile messaging technologies within the mobile communication network in a manner that the converged messaging application provides
- for messages of different mobile messaging technologies - at least:
   -- storing,
   -- forwarding, and
   -- user availability handling
of the messages.

Likewise, the other above mentioned advantages of the inventive method, of the inventive system and of the inventive mobile communication network apply - mutatis mutandis - also to the inventive user equipment.

Additionally - also with respect to the converged messaging application - it is preferred that the messages of different mobile messaging technologies are represented - in the communication between the converged messaging application and the protocol mapping gateway nodes - as normalized and abstracted message elements.

Additionally - also with respect to the converged messaging application - it is preferred that the converged messaging application is configured such that it centrally controls the treatment of messages of different mobile messaging technologies within the mobile communication network such that a modification of the treatment of messages of different mobile messaging technologies primarily requires a modification of the converged messaging application.

Furthermore, the present invention relates to a program comprising a computer readable program code which, when executed on a computer and/or on a network node of a mobile communication network, especially on a network node realizing a converged messaging application and/or on a network node realizing at least one protocol mapping gateway node, especially in part on the network node realizing the converged messaging application and/or on the network node realizing the at least one protocol mapping gateway node, causes the computer and/or the network node of the mobile communication network to perform the inventive method.

The present invention also relates to computer program product for using a core network of a telecommunications network, the computer program product comprising a computer program stored on a storage medium, the computer program comprising program code which, when executed on a computer and/or on a network node of a mobile communication network, especially on a network node realizing a converged messaging application and/or on a network node realizing at least one protocol mapping gateway node, especially in part on the network node realizing the converged messaging application and/or on the network node realizing the at least one protocol mapping gateway node, causes the computer and/or the network node of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a conventional mobile communication network comprising different network nodes providing messaging functionality.
Figure 2 schematically illustrates a mobile communication network according to the present invention comprising a converged messaging application as well as a plurality of protocol mapping gateway nodes.
Figure 3 schematically illustrates the communication between the converged messaging application and a first protocol mapping gateway node.
Figure 4 schematically illustrates the communication between the converged messaging application and a second protocol mapping gateway node.
Figure 5 schematically illustrates the communication between the converged messaging application and a third protocol mapping gateway node.
Figure 6 schematically illustrates the communication between the converged messaging application and a fourth protocol mapping gateway node.
Figure 7 schematically illustrates the communication between the converged messaging application and a fifth protocol mapping gateway node.
Figure 8 schematically illustrates the communication between the converged messaging application and a seventh protocol mapping gateway node.
Figure 9 schematically illustrates the communication between the converged messaging application and a sixth protocol mapping gateway node.
Figures 10 and 11 schematically illustrate the converged messaging application together with connected elements and network nodes in greater detail.
Figure 12 schematically illustrates an example of the use of the converged messaging application as well as some of the protocol mapping gateway nodes for the case of an MMS flow.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

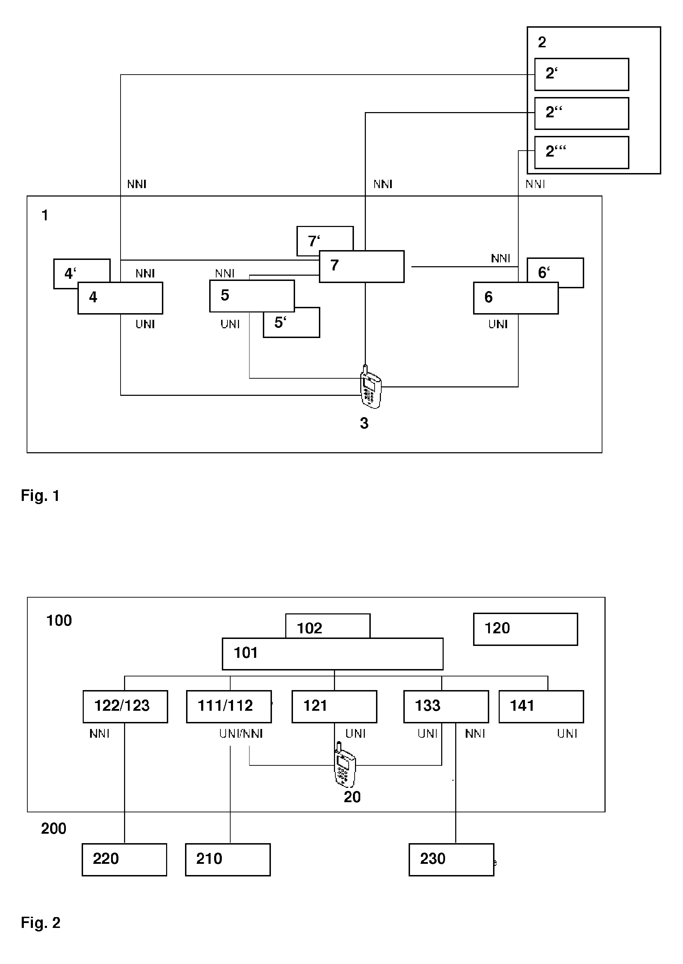

In Figure 1, a conventional mobile communication network 1 is schematically shown together with a messaging device 3 such as a mobile phone or, generally, a user equipment 3.

A first network node 4 of the conventional mobile communication network 1 provides short message service (SMS). An associated message storage 4' stores the corresponding SMS messages. A second network node 5 of the conventional mobile communication network 1 provides voice mail messaging services. An associated message storage 5' stores the corresponding voice mail messages. A third network node 6 of the conventional mobile communication network 1 provides multimedia message service (MMS). An associated message storage 6' stores the corresponding MMS messages. A fourth network node 7 of the conventional mobile communication network 1 provides converged IP messaging services (CPM). An associated message storage 7' stores the corresponding CPM messages.

A further conventional mobile communication network 2 is connected to the conventional mobile communication network 1. The further conventional mobile communication network 2 also comprises different network nodes providing messaging functionality. A first network node 2' of the further conventional mobile communication network 2 provides short message service (SMS). A second network node 2" of the further conventional mobile communication network 2 provides converged IP messaging services (CPM). A third network node 2'" of the conventional mobile communication network 1 provides multimedia message service (MMS).

The first network node 4 of the conventional mobile communication network 1 is connected to the first network node 2' of the further conventional mobile communication network 2 via a network-network interface which is indicated by the reference sign "NNI" in Figure 1. The fourth network node 7 of the conventional mobile communication network 1 is connected to the second network node 2" of the further conventional mobile communication network 2 likewise via a network-network interface which is indicated by the reference sign "NNI" in Figure 1. The third network node 6 of the conventional mobile communication network 1 is connected to the third network node 2'" of the further conventional mobile communication network 2 likewise via a network-network interface which is indicated by the reference sign "NNI" in Figure 1. Furthermore, the fourth network node 7 of the conventional mobile communication network 1 is connected to the first, second and third network nodes 4, 5, 6 of the conventional mobile communication network 1 likewise via a network-network interface which is indicated by the reference sign "NNI" in Figure 1, respectively.

The messaging device 3 is connected to the first, second and third network nodes 4, 5, 6 of the conventional mobile communication network 1 via a user-network interface which is indicated by the reference sign "UNI" in Figure 1.

The conventional (partial) realization of converged messaging relies mainly on interworking functions to achieve interoperability between different services (i.e. services used for the handling of different types of messages or different mobile messaging technologies. The interworking functions process the cross service communication on service interworking level, i.e. the legacy services are full operational services with its own service execution flow.

In Figure 2, a mobile communication network 100 according to the present invention is schematically shown together with a user equipment 20 (or mobile device 20 or messaging device 20). The mobile communication network 100 comprises a converged messaging application 101 as well as a plurality of protocol mapping gateway nodes 111, 112, 121, 122/123, 133, 141. A central message storage 102 is associated to the converged messaging application 101.

The mobile communication network 100 furthermore comprises a core network 120 which is only schematically shown and which is, of course, also connected to a number of network nodes of the mobile communication network 100. Figure 2 also schematically shows a further mobile communication network 200 (or "foreign" public land mobile network), comprising a multimedia messaging service node 220, a short message service node 210, and a converged IP messaging service node 230.

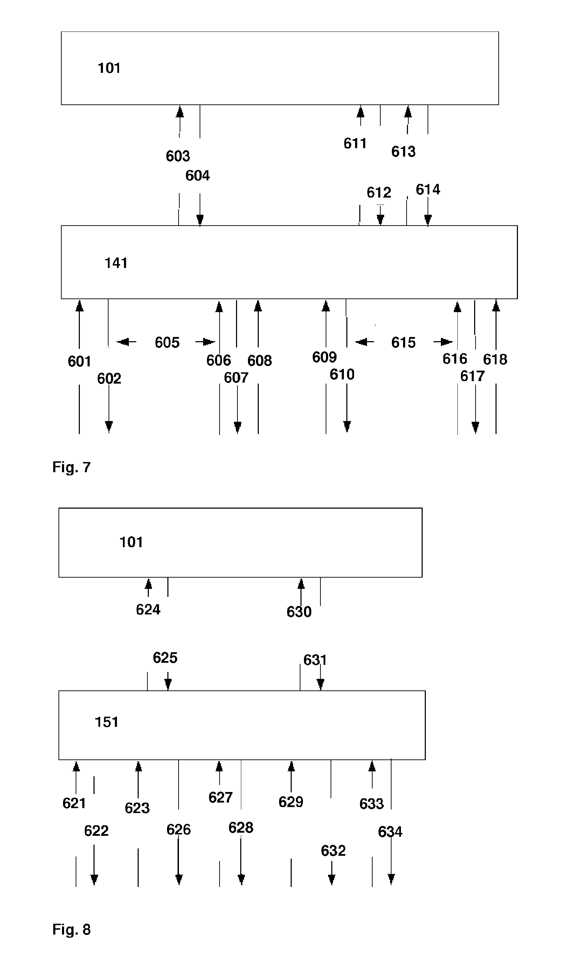

A first protocol mapping gateway node 111 ("SMS MAP Gateway") corresponds to a gateway node having a user-network interface (reference sign "UNI" in Figure 2) towards the user equipment 20 and providing an SMS handling interface. A second protocol mapping gateway node 112 ("SMS NNI Gateway") corresponds to a gateway node having a network-network interface (reference sign "NNI" in Figure 2) towards the further mobile communication network 200 ("foreign public land mobile network"), namely to the short message service node 210 of the further mobile communication network 200, and providing an SMS handling interface. A third protocol mapping gateway node 121 ("MMS MAP Gateway") corresponds to a gateway node having a user-network interface (reference sign "UNI" in Figure 2) towards the user equipment 20 and providing an MMS handling interface. A fourth protocol mapping gateway node 122/123 ("MMS NNI Gateway") corresponds to a gateway node having a network-network interface (reference sign "NNI" in Figure 2) towards the further mobile communication network 200 ("foreign public land mobile network"), namely to the multimedia messaging service node 220 of the further mobile communication network 200, and providing an MMS handling interface. A fifth protocol mapping gateway node 141 ("Voice Interaction Gateway") corresponds to a gateway node having a user-network interface (reference sign "UNI" in Figure 2) towards the user equipment 20 and providing a voice interaction interface. A sixth protocol mapping gateway node 133 ("CPM Gateway") corresponds to a gateway node having both
-- a user-network interface (reference sign "UNI" in Figure 2) towards the user equipment 20, and
-- a network-network interface (reference sign "NNI" in Figure 2) towards the further mobile communication network 200, namely to the converged IP messaging service node 230 of the further mobile communication network 200,
   and providing a converged IP messaging interface. A seventh protocol mapping gateway node - not depicted in Figure 2; reference sign 151 in Figure 8 - ("IMAP Gateway") corresponds to a gateway node having a user-network interface towards the user equipment 20 and/or a network-network interface towards the further mobile communication network 200 and providing an IMAP interface.

According to the present invention, a new messaging architecture is proposed which is based on a new organization and split of functions for all operator messaging services within the mobile communication network 200. There are a number of messaging services, both having user-network interfaces (UNI), and having network-network interfaces (NNI), that need to be maintained for a period of time to achieve interoperability with clients (i.e. mobile devices) and other mobile communication networks 200. According to the present invention, instead of deploying a "service" per interface, it is proposed to provide the interoperability via the protocol mapping gateways or protocol mapping gateway nodes 111, 112, 121, 122/123, 133, 141, 151 at the boundary of the mobile communication network 100.

The protocol mapping gateways (or protocol mapping gateway nodes 111, 112, 121, 122, 133, 141, 151) do not longer provide "service access" via the common interconnection (wholesale) interfaces but a full abstraction of the access specific transaction and session flows of the user-network interface or the network-network interface to atomic messaging and enabling transactions towards the common messaging service, i.e. the converged messaging application 101. The converged messaging application 101 is able to execute custom and cross access business logic to generate new messaging services flows in a very efficient manner. The atomic transactions between the access and application functions should be defined for generic use across a number of services, e.g. a Submit transaction should be able to carry short messages, multimedia messages or CPM massages. However the characteristic of a single message should be maintained, e.g. a submitted short message is first stored in its native format. The message conversion is then part of the delivery service, i.e. the message format is only adopted if the transfer media changes.

While maintaining compliance to the standardized network interfaces, the proposed inventive converged messaging architecture (converged messaging application 101) allows for an abstraction of the protocol methods across all network interfaces. The abstracted methods allow to treat messages of different types with a customizable service logic that is not bound to the constraints and boundaries of the originating network protocol. The flexible service creation and invocation of external systems allows the creation of services with unique selling points for network providers while maintaining service interworking with other networks (i.e. the further mobile communication network 200). The abstraction of all messaging network interfaces allows to create service flows across messaging services that by default could not interact without heavy proprietary development.

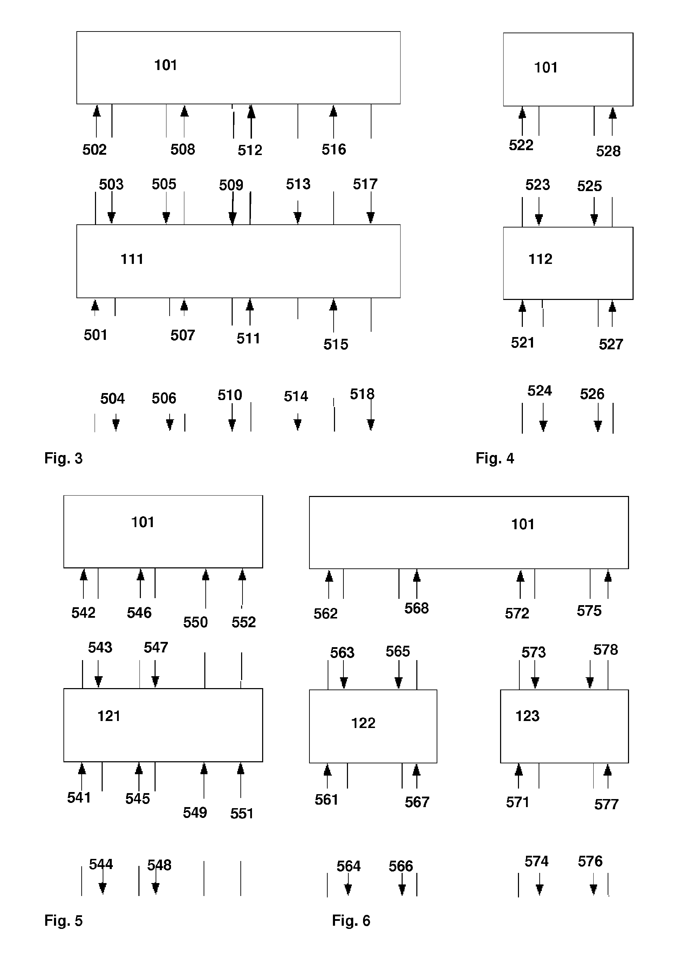

Figure 3 schematically illustrates the communication (transaction mapping) between the converged messaging application 101 and the first protocol mapping gateway node 111 (i.e. the "SMS MAP Gateway"). The SMS MAP Gateway (i.e. first protocol mapping gateway node 111) translates single SMS transactions on MAP level to atomic messaging and addressing transactions.

In a processing step 501, the user equipment 20 transmits a "MO Forward SM Request" communication to the first protocol mapping gateway node 111. In a processing step 502, the first protocol mapping gateway node 111 transmits a "Submit Request" communication to the converged messaging application 101. In a processing step 503, the converged messaging application 101 transmits a "Submit Response" communication to the first protocol mapping gateway node 111. In a processing step 504, the first protocol mapping gateway node 111 transmits a "MO Forward SM Response" communication to the user equipment 20. In a processing step 505, the converged messaging application 101 transmits a "Deliver Request" communication to the first protocol mapping gateway node 111. In a processing step 506, the first protocol mapping gateway node 111 transmits a "MT Forward SM Request" communication to the user equipment 20. In a processing step 507, the user equipment 20 transmits a "MT Forward SM Response" communication to the first protocol mapping gateway node 111. In a processing step 508, the first protocol mapping gateway node 111 transmits a "Deliver Response" communication to the converged messaging application 101. In a processing step 509, the converged messaging application 101 transmits a "Resolve MSISDN Request" communication to the first protocol mapping gateway node 111. In a processing step 510, the first protocol mapping gateway node 111 transmits a "SRI (Send Routing Information) For SM Request" communication to the user equipment 20. In a processing step 511, the user equipment 20 transmits a "SRI (Send Routing Information) For SM Response" communication to the first protocol mapping gateway node 111. In a processing step 512, the first protocol mapping gateway node 111 transmits a "Resolve MSISDN Response" communication to the converged messaging application 101. In a processing step 513, the converged messaging application 101 transmits a "Subscribe" communication to the first protocol mapping gateway node 111. In a processing step 514, the first protocol mapping gateway node 111 transmits a "Report SM Delivery" communication to the originating network/circuit switched network. In a processing step 515, the originating network/circuit switched network transmits a "Alert SC (Service Center)" communication to the first protocol mapping gateway node 111. In a processing step 516, the first protocol mapping gateway node 111 transmits a "Notify" communication to the converged messaging application 101. In a processing step 517, the converged messaging application 101 transmits a "Notify" communication to the first protocol mapping gateway node 111. In a processing step 518, the first protocol mapping gateway node 111 transmits a "Ready For SM" communication to the user equipment 20.

Figure 4 schematically illustrates the communication (transaction mapping) between the converged messaging application 101 and a second protocol mapping gateway node 112 (i.e. the "SMS NNI Gateway"). SMS ESME Gateway

A common interconnection and wholesale interface is provides via the SMS ESME. A Gateway provides mapping of the atomic messaging service transactions to the external ESME protocol.

In a processing step 521, the further mobile communication network 200 transmits a "Submit SM Request" communication to the second protocol mapping gateway node 112. In a processing step 522, the second protocol mapping gateway node 112 transmits a "Submit Request" communication to the converged messaging application 101. In a processing step 523, the converged messaging application 101 transmits a "Submit Response" communication to the second protocol mapping gateway node 112. In a processing step 524, the second protocol mapping gateway node 112 transmits a "Submit SM Response" communication to the further mobile communication network 200. In a processing step 525, the converged messaging application 101 transmits a "Deliver Request" communication to the second protocol mapping gateway node 112. In a processing step 526, the second protocol mapping gateway node 112 transmits a "Deliver SM Request" communication to the further mobile communication network 200. In a processing step 527, the further mobile communication network 200 transmits a "Deliver SM Response" communication to the second protocol mapping gateway node 112. In a processing step 528, the second protocol mapping gateway node 112 transmits a "Deliver Response" communication to the converged messaging application 101.

Figure 5 schematically illustrates the communication (transaction mapping) between the converged messaging application 101 and the third protocol mapping gateway node 121 (i.e. the "MMS MAP Gateway", also called MMS MM1 Signaling Gateway).

The MM1 Signaling Gateway 121 provides the mapping of the HTTP based MM1 transactions to atomic messaging service transaction.

In a processing step 541, the user equipment 20 transmits a "MM-Submit Request" communication to the third protocol mapping gateway node 121. In a processing step 542, the third protocol mapping gateway node 121 transmits a "Submit Request" communication to the converged messaging application 101. In a processing step 543, the converged messaging application 101 transmits a "Submit Response" communication to the third protocol mapping gateway node 121. In a processing step 544, the third protocol mapping gateway node 121 transmits a "MM-Submit Response" communication to the user equipment 20. In a processing step 545, the user equipment 20 transmits a "MM Get" communication to the third protocol mapping gateway node 121. In a processing step 546, the third protocol mapping gateway node 121 transmits a "Retrieve Request" communication to the converged messaging application 101. In a processing step 547, the converged messaging application 101 transmits a "Retrieve Response" communication to the third protocol mapping gateway node 121. In a processing step 548, the third protocol mapping gateway node 121 transmits a "MM-Submit Response" communication to the user equipment 20. In a processing step 549, the user equipment 20 transmits a "Notify Response" communication to the third protocol mapping gateway node 121. In a processing step 550, the third protocol mapping gateway node 121 transmits a "Notify" communication to the converged messaging application 101. In a processing step 551, the user equipment 20 transmits a "Acknowledge" communication to the third protocol mapping gateway node 121. In a processing step 552, the third protocol mapping gateway node 121 transmits a "Notify" communication to the converged messaging application 101.

Figure 6 schematically illustrates the communication (transaction mapping) between the converged messaging application 101 and the fourth protocol mapping gateway nodes 122 and 123 (i.e. the "MMS NNI Gateway" comprising the MMS MM7 Gateway 122, and the MMS MM4/SMTP Gateway 123). Interconnection and wholesale interfaces are provided for MMS via SMTP or MM7 interfaces. The similar flows are mapped to the specific protocols via dedicated signaling gateways.

In a processing step 561, the further mobile communication network 200 transmits a "MM7 Submit Request" communication to the fourth protocol mapping gateway node 122 (MMS MM7Gateway 122). In a processing step 562, the fourth protocol mapping gateway node 122 (MMS MM7 Gateway 122) transmits a "Submit Request" communication to the converged messaging application 101. In a processing step 563, the converged messaging application 101 transmits a "Submit Response" communication to the fourth protocol mapping gateway node 122 (MMS MM7 Gateway 122). In a processing step 564, the fourth protocol mapping gateway node 122 (MMS MM7 Gateway 122) transmits a "MM7 Submit Response" communication to the further mobile communication network 200. In a processing step 565, the converged messaging application 101 transmits a "Deliver Request" communication to the fourth protocol mapping gateway node 122 (MMS MM7 Gateway 122). In a processing step 566, the fourth protocol mapping gateway node 122 (MMS MM7 Gateway 122) transmits a "MM7 Deliver Request" communication to the further mobile communication network 200. In a processing step 567, the further mobile communication network 200 transmits a "MM7 Deliver Response" communication to the fourth protocol mapping gateway node 122 (MMS MM7 Gateway 122). In a processing step 568, the fourth protocol mapping gateway node 122 (MMS MM7 Gateway 122) transmits a "Deliver Response" communication to the converged messaging application 101.

In a processing step 571, the further mobile communication network 200 transmits a "MM4 Submit Request" communication to the fourth protocol mapping gateway node 123 (MMS MM4/SMTP Gateway 123). In a processing step 572, the fourth protocol mapping gateway node 123 (MMS MM4/SMTP Gateway 123) transmits a "Submit Request" communication to the converged messaging application 101. In a processing step 573, the converged messaging application 101 transmits a "Submit Response" communication to the fourth protocol mapping gateway node 123 (MMS MM4/SMTP Gateway 123). In a processing step 574, the fourth protocol mapping gateway node 123 (MMS MM4/SMTP Gateway 123) transmits a "MM4 Submit Response" communication to the further mobile communication network 200. In a processing step 575, the converged messaging application 101 transmits a "Deliver Request" communication to the fourth protocol mapping gateway node 123 (MMS MM4/SMTP Gateway 123). In a processing step 576, the fourth protocol mapping gateway node 123 (MMS MM4/SMTP Gateway 123) transmits a "MM4 Deliver Request" communication to the further mobile communication network 200. In a processing step 577, the further mobile communication network 200 transmits a "MM4 Deliver Response" communication to the fourth protocol mapping gateway node 123 (MMS MM4/SMTP Gateway 123). In a processing step 578, the fourth protocol mapping gateway node 123 (MMS MM4/SMTP Gateway 123) transmits a "Deliver Response" communication to the converged messaging application 101.

Figure 7 schematically illustrates the communication (transaction mapping) between the converged messaging application 101 and the fifth protocol mapping gateway node 141 (i.e. the "Voice Interaction Gateway"). There may be more complex applications that need to make use of core messaging service functions. These application provide typically an advanced user interface for the user to deposit, send or retrieve messages. Typical application scenarios are voice or web mail application. In this example a typical mapping of a voice controlled user interface to atomic messaging events is depicted. The Voice Interaction Gateway 141 executes - for a typical voicemail service - voice dialogs within a call to deposit or to retrieve message. The Interaction with the converged messaging application 101 is based on the atomic transactions defined for the messaging service.

In a processing step 601, the user equipment 20 transmits an "Invite" communication to the fifth protocol mapping gateway node 141. In a processing step 602, the fifth protocol mapping gateway node 141 transmits a "200 OK" communication to the user equipment 20. In a processing step 603, the fifth protocol mapping gateway node 141 transmits a "Submit Request" communication to the converged messaging application 101. In a processing step 604, the converged messaging application 101 transmits a "Submit Response" communication to the fifth protocol mapping gateway node 141. In a processing step 605, the voice dialog to deposit the voice message is performed. In a processing step 606, the user equipment 20 transmits a "Bye" communication to the fifth protocol mapping gateway node 141. In a processing step 607, the fifth protocol mapping gateway node 141 transmits a "200 OK" communication to the user equipment 20. In a processing step 608, the user equipment 20 transmits an "Acknowlege" communication to fifth protocol mapping gateway node 141. In a processing step 609, the user equipment 20 transmits an "Invite" communication to the fifth protocol mapping gateway node 141. In a processing step 610, the fifth protocol mapping gateway node 141 transmits a "200 OK" communication to the user equipment 20. In a processing step 611, the fifth protocol mapping gateway node 141 transmits a "Retrieve List Request" communication to the converged messaging application 101. In a processing step 612, the converged messaging application 101 transmits a "Retrieve List Response" communication to the fifth protocol mapping gateway node 141. In a processing step 613, the fifth protocol mapping gateway node 141 transmits a "Retrieve Request" communication to the converged messaging application 101. In a processing step 614, the converged messaging application 101 transmits a "Retrieve Response" communication to the fifth protocol mapping gateway node 141. In a processing step 615, the voice dialog to retrieve a message or messages is performed. In a processing step 616, the user equipment 20 transmits a "Bye" communication to the fifth protocol mapping gateway node 141. In a processing step 617, the fifth protocol mapping gateway node 141 transmits a "200 OK" communication to the user equipment 20. In a processing step 618, the user equipment 20 transmits an "Acknowledge" communication to the fifth protocol mapping gateway node 141.

Figure 8 schematically illustrates the communication (transaction mapping) between the converged messaging application and the seventh protocol mapping gateway node 151 (i.e. the "IMAP Gateway"). The Management of Messages can be applied by standard mailbox protocols, e.g. IMAP. The access to the converged messaging application 101 applies in this case also via an appropriate gateway, the seventh protocol mapping gateway node 151 (i.e. the "IMAP Gateway"). The Gateway maps in this case the IMAP commands in a session to atomic messaging transactions towards the messaging application.

In a processing step 621, the user equipment 20 transmits an "IMAP Login" communication to the seventh protocol mapping gateway node 151. In a processing step 622, the seventh protocol mapping gateway node 151 transmits a "OK" communication to the user equipment 20. In a processing step 623, the user equipment 20 transmits a "IMAP List" communication to the seventh protocol mapping gateway node 151. In a processing step 624, the seventh protocol mapping gateway node 151 transmits a "Retrieve List Request" communication to the converged messaging application 101. In a processing step 625, the converged messaging application 101 transmits a "Retrieve List Response" communication to the seventh protocol mapping gateway node 151. In a processing step 626, the seventh protocol mapping gateway node 151 transmits a "LIST" communication to the user equipment 20. In a processing step 627, the user equipment 20 transmits a "SELECT INBOX" communication to the seventh protocol mapping gateway node 151. In a processing step 628, the seventh protocol mapping gateway node 151 transmits a "OK" communication to user equipment 20. In a processing step 629, the user equipment 20 transmits an "IMAP FETCH" communication to the seventh protocol mapping gateway node 151. In a processing step 630, the seventh protocol mapping gateway node 151 transmits a "Retrieve Request" communication to the converged messaging application 101. In a processing step 631, the converged messaging application 101 transmits a "Retrieve Response" communication to the seventh protocol mapping gateway node 151. In a processing step 632, the seventh protocol mapping gateway node 151 transmits the content of the e-mail message to the user equipment 20. In a processing step 633, the user equipment 20 transmits a "IMAP LOGOUT" communication to the seventh protocol mapping gateway node 151. In a processing step 634, the seventh protocol mapping gateway node 151 transmits a "OK" communication to the user equipment 20.

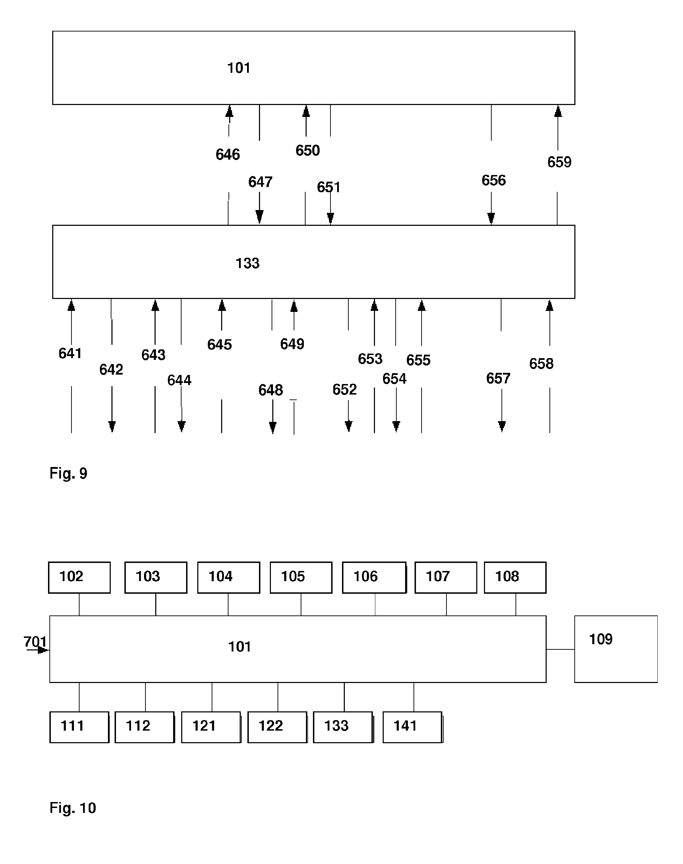

Figure 9 schematically illustrates the communication (transaction mapping) between the converged messaging application and the sixth protocol mapping gateway node 133 (i.e. "CPM Gateway", the Converged IP Messaging Gateway). Also the Converged IP Messaging Service is provided only via a access specific signaling gateway function, realized in the sixth protocol mapping gateway node 133. This gateway, e.g., maps the session based chat conversation into atomic messaging transactions towards the converged messaging application 101. Also the converged messaging application 101 will gain via this access to subscriber availability and presence and device capability information.

In a processing step 641, the user equipment 20 transmits an "INVITE" communication to the sixth protocol mapping gateway node 133. In a processing step 642, the sixth protocol mapping gateway node 133 transmits a "INVITE" communication to the user equipment 20. In a processing step 643, the user equipment 20 transmits an "200 OK" communication to the sixth protocol mapping gateway node 133. In a processing step 644, the sixth protocol mapping gateway node 133 transmits a "200 OK" communication to the user equipment 20. In a processing step 645, the user equipment 20 transmits a "MSRP SEND" communication to the sixth protocol mapping gateway node 133. In a processing step 646, the sixth protocol mapping gateway node 133 transmits a "Submit Request" communication to the converged messaging application 101. In a processing step 647, the converged messaging application 101 transmits a "Deliver Request" communication to the sixth protocol mapping gateway node 133. In a processing step 648, the sixth protocol mapping gateway node 133 transmits a "MSRP SEND" communication to the user equipment 20. In a processing step 649, the user equipment 20 transmits an "MSRP 200 OK" communication to the sixth protocol mapping gateway node 133. In a processing step 650, the sixth protocol mapping gateway node 133 transmits a "Deliver Response" communication to the converged messaging application 101. In a processing step 651, the converged messaging application 101 transmits a "Submit Response" communication to the sixth protocol mapping gateway node 133. In a processing step 652, the sixth protocol mapping gateway node 133 transmits a "MSRP 200 OK" communication to user equipment 20. In a processing step 653, the user equipment 20 transmits a "BYE" communication to the sixth protocol mapping gateway node 133. In a processing step 654, the sixth protocol mapping gateway node 133 transmits a "200 OK" communication to the user equipment 20. In a processing step 655, the user equipment 20 transmits an "Acknowledge" communication to the sixth protocol mapping gateway node 133. In a processing step 656, the converged messaging application 101 transmits a "Subscribe" communication to the sixth protocol mapping gateway node 133. In a processing step 657, the sixth protocol mapping gateway node 133 transmits a "Subscribe" communication to the user equipment 20. In a processing step 658, the user equipment 20 transmits an "Notify" communication to the sixth protocol mapping gateway node 133. In a processing step 659, the sixth protocol mapping gateway node 133 transmits a "Notify" communication to the converged messaging application 101.

In Figure 10 the converged messaging application 101 together with connected elements and network nodes are shown in greater detail, especially the embedding of the converged messaging application 101. Reference sign 701 represents a programming interface for service creation. According to the present invention, it is advantageously possible to modify message handling across different types of messages in a very efficient manner, namely by modifying the message control centralized in the converged messaging application 101. Reference sign 102 represents the message store. Reference sign 103 represents the subscriber repository. Reference sign 104 represents the accounting. Reference sign 105 represents the charging. Reference sign 106 represents the transcoding. Reference sign 107 represents the anti virus functionality. Reference sign 108 represents the addressing. Reference sign 109 represents system external application platforms. Reference signs 111 to 141 represent the first to the sixth protocol mapping gateway nodes.

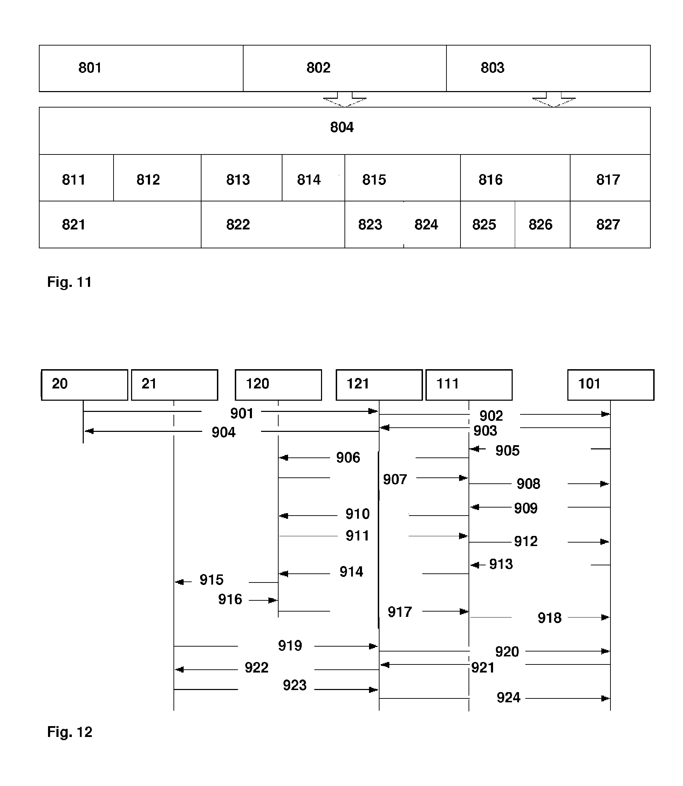

In Figure 11 the converged messaging application 101 together with connected elements and network nodes are shown in greater detail, especially the internal logical structures. Reference sign 801 represents the service development environment. Reference sign 802 represents the service control layer. Reference sign 803 represents the service management and configuration functionality. Reference sign 804 represents the layer of the different message types, including especially SMS, MMS, RCS, Custom services, and message enrichment. Reference sign 811 represents the message handling. Reference sign 812 represents the session and group management. Reference sign 813 represents the message state management. Reference sign 814 represents the scheduler. Reference sign 815 represents the content management. Reference sign 816 represents the policy management. Reference sign 817 represents the accounting. Reference sign 821 represents the messaging API (Application Program Interface). Reference sign 822 represents the message store API. Reference sign 823 represents the ICAP interface. Reference sign 824 represents the STI interface. Reference sign 825 represents the MM10 interface. Reference sign 826 represents the LDAP/IDM interface. Reference sign 827 represents the diameter/ftp interface.

With the provisioning of access specific gateways 111 to 151 and the consumption of a number of operator specific enablers from the business, network or messaging layer, the Converged Messaging Service according to the present invention becomes the execution layer for all messaging services of the operator of the mobile communication network 100.

To achieve this, the converged messaging application 101 may be provided by a layered functional architecture in itself. For the various services it consumes and it provides, an internal abstraction layer may be provided.

The abstracted services are used to provide basic capabilities which can be consumed by the service execution layer. The Service execution layer may be managed by a service creation layer, allowing the operator to create custom service or to adopt the core messaging flow according to the market needs.

The Abstraction layer provides the access to the external interfaces. Based on that, a number of common service capabilities are provided. On Service execution layer the services are executed in accordance with the market needs. These may be equivalents of the existing services (SMS, MMS) or it may be fully customized services with cross access messaging flows. It may also be used to enrich the service experience, e.g. by message tagging, periodization, subscriber profiling, or the like.

In Figure 12, an example of the use of the converged messaging application 101 as well as some of the protocol mapping gateway nodes for the case of an MMS flow is schematically shown. Figure 12 shows a communication diagram between the user equipment user equipment 20 (sending an MMS), another user equipment 21 (receiving the MMS), the core network 120 of the mobile communication network 100, the third protocol mapping gateway node 121, the first protocol mapping gateway node 111, and the converged messaging application 101.

Reference sign 901 relates to the transmission of a "MM Submit Request" communication from the user equipment 20 to the third protocol mapping gateway node 121. Reference sign 902 relates to the transmission of a "Submit Request" communication from the third protocol mapping gateway node 121 to the converged messaging application 101. Reference sign 903 relates to the transmission of a "MM Submit Response" communication from the converged messaging application 101 to the third protocol mapping gateway node 121. Reference sign 904 relates to the transmission of a "MM Submit Response" communication from the third protocol mapping gateway node 121 to the user equipment 20. Reference sign 905 relates to the transmission of a "Delivery Request (MM NotifReq)" communication from the converged messaging application 101 to the first protocol mapping gateway node 111. Reference sign 906 relates to the transmission of a "Forward MT SMS Request" communication from the first protocol mapping gateway node 111 to the core network 120. Reference sign 907 relates to the transmission of a "Forward MT SMS Error" communication from the core network 120 to the first protocol mapping gateway node 111. Reference sign 908 relates to the transmission of a "Delivery Error" communication from the first protocol mapping gateway node 111 to the converged messaging application 101. Reference sign 909 relates to the transmission of a "Subscribe" communication from the converged messaging application 101 to the first protocol mapping gateway node 111. Reference sign 910 relates to the transmission of a "Report SM Delivery" communication from the first protocol mapping gateway node 111 to the core network 120. Reference sign 911 relates to the transmission of a "SC (serving cell) Alert" communication from the core network 120 to the first protocol mapping gateway node 111. Reference sign 912 relates to the transmission of a "Notify" communication from the first protocol mapping gateway node 111 to the converged messaging application 101. Reference sign 913 relates to the transmission of a "Delivery Request (MM Notif. Ind.)" communication from the converged messaging application 101 to the first protocol mapping gateway node 111. Reference sign 914 relates to the transmission of a "Forward MT SMS Reqeust" communication from the first protocol mapping gateway node 111 to the core network 120. Reference sign 915 relates to the transmission of a "Delivery Request" communication from the core network 120 to the further user equipment 21. Reference sign 910 relates to the transmission of a "Delivery Response" communication from the further user equipment 21 to the core network 120. Reference sign 917 relates to the transmission of a "Forward MT SMS Response" communication from the core network 120 to the first protocol mapping gateway node 111. Reference sign 918 relates to the transmission of a "Delivery Response" communication from the first protocol mapping gateway node 111 to the converged messaging application 101. Reference sign 919 relates to the transmission of a "MM Get" communication from the further user equipment 21 to the third protocol mapping gateway node 121. Reference sign 920 relates to the transmission of a "Retrieve Request" communication from the third protocol mapping gateway node 121 to the converged messaging application 101. Reference sign 921 relates to the transmission of a "Retrieve Response" communication from the converged messaging application 101 to the third protocol mapping gateway node 121. Reference sign 922 relates to the transmission of a "MM Retrieve Confirm" communication from the third protocol mapping gateway node 121 to the user further equipment 21. Reference sign 923 relates to the transmission of a "MM Notify Res. Ind." communication from the further user equipment 21 to the third protocol mapping gateway node 121. Reference sign 924 relates to the transmission of a "Notify" communication from the third protocol mapping gateway node 121 to the converged messaging application 101.

## Claims

1. Method for an enhanced and flexible converged messaging functionality of a mobile communication network (100), wherein the mobile communication network (100) comprises a converged messaging application (101) as well as a plurality of protocol mapping gateway nodes (111, 112, 121, 122, 133, 141, 151),
wherein the converged messaging application (101) controls the treatment of messages of different mobile messaging technologies within the mobile communication network (100) such that the converged messaging application (101) provides - for messages of different mobile messaging technologies - at least:
-- storing,
-- forwarding, and
-- user availability handling
of the messages.

2. Method according to claim 1, wherein the messages of different mobile messaging technologies are represented - in the communication between the converged messaging application (101) and the protocol mapping gateway nodes (111, 112, 121, 122, 133, 141, 151) - as normalized and abstracted message elements.

3. Method according to one of the preceding claims, wherein the message elements together comprise the protocol and access specific signaling as well as the messaging logic of the messages of different mobile messaging technologies, wherein the protocol and access specific signaling and/or the messaging logic are especially represented in form of meta data accompanying the message element.

4. Method according to one of the preceding claims, wherein in case of a particular incoming message of a first type, the converged messaging application (101) provides for the delivery and/or for forwarding of the particular message to be sent as a message of a second type, wherein a first gateway node of the plurality of protocol mapping gateway nodes (111, 112, 121, 122, 133, 141, 151) is used for the reception of the particular incoming message, and wherein a second gateway node of the plurality of protocol mapping gateway nodes (111, 112, 121, 122, 133, 141, 151) is used for the delivery and/or for the forwarding of the particular message to be sent.

5. Method according to one of the preceding claims, wherein the converged messaging application (101) centrally controls the treatment of messages of different mobile messaging technologies within the mobile communication network (100) such that a modification of the treatment of messages of different mobile messaging technologies primarily requires a modification of the converged messaging application (101).

6. System for an enhanced and flexible converged messaging functionality of a mobile communication network (100), wherein the system comprises a converged messaging application (101) as well as a plurality of protocol mapping gateway nodes (111, 112, 121, 122, 133, 141, 151),
wherein the converged messaging application (101) is configured such as to control the treatment of messages of different mobile messaging technologies within the mobile communication network (100) in a manner that the converged messaging application (101) provides - for messages of different mobile messaging technologies - at least:
-- storing,
-- forwarding, and
-- user availability handling
of the messages.

7. System according to claim 6, wherein the messages of different mobile messaging technologies are represented - in the communication between the converged messaging application (101) and the protocol mapping gateway nodes (111, 112, 121, 122, 133, 141, 151) - as normalized and abstracted message elements.

8. System according to claim 6 or 7, wherein the message elements together comprise the protocol and access specific signaling as well as the messaging logic of the messages of different mobile messaging technologies, wherein the protocol and access specific signaling and/or the messaging logic are especially represented in form of meta data accompanying the message element.

9. System according to claim 6, 7 or 8, wherein the converged messaging application (101) is configured such that it centrally controls the treatment of messages of different mobile messaging technologies within the mobile communication network (100) such that a modification of the treatment of messages of different mobile messaging technologies primarily requires a modification of the converged messaging application (101).

10. Mobile communication network (100) for an enhanced and flexible converged messaging functionality, wherein the mobile communication network (100) comprises a converged messaging application (101) as well as a plurality of protocol mapping gateway nodes (111, 112, 121, 122, 133, 141, 151),
wherein the converged messaging application (101) is configured such as to control the treatment of messages of different mobile messaging technologies within the mobile communication network (100) in a manner that the converged messaging application (101) provides - for messages of different mobile messaging technologies - at least:
-- storing,
-- forwarding, and
-- user availability handling
of the messages.

11. Converged messaging application (101) for an enhanced and flexible converged messaging functionality of a mobile communication network (100), wherein the converged messaging application (101) is associated to a plurality of protocol mapping gateway nodes (111, 112, 121, 122, 133, 141, 151),
wherein the converged messaging application (101) is configured such as to control the treatment of messages of different mobile messaging technologies within the mobile communication network (100) in a manner that the converged messaging application (101) provides - for messages of different mobile messaging technologies - at least:
-- storing,
-- forwarding, and
-- user availability handling
of the messages.

12. Converged messaging application (101) according to claim 11, wherein the messages of different mobile messaging technologies are represented - in the communication between the converged messaging application (101) and the protocol mapping gateway nodes (111, 112, 121, 122, 133, 141, 151) - as normalized and abstracted message elements.

13. Converged messaging application (101) according to claim 11 or 12, wherein the converged messaging application (101) is configured such that it centrally controls the treatment of messages of different mobile messaging technologies within the mobile communication network (100) such that a modification of the treatment of messages of different mobile messaging technologies primarily requires a modification of the converged messaging application (101).

14. Program comprising a computer readable program code which, when executed on a computer and/or on a network node of a mobile communication network (100), especially on a network node realizing a converged messaging application (101) and/or on a network node realizing at least one protocol mapping gateway node (111, 112, 121, 122, 133, 141, 151), especially in part on the network node realizing the converged messaging application (101) and/or on the network node realizing the at least one protocol mapping gateway node (111, 112, 121, 122, 133, 141, 151), causes the computer and/or the network node of the mobile communication network (100) to perform a method according one of claims 1 to 5.

15. Computer program product for using a telecommunications network (100), the computer program product comprising a computer program stored on a storage medium, the computer program comprising program code which, when executed on a computer and/or on a network node of a mobile communication network (100), especially on a network node realizing a converged messaging application (101) and/or on a network node realizing at least one protocol mapping gateway node (111, 112, 121, 122, 133, 141, 151), especially in part on the network node realizing the converged messaging application (101) and/or on the network node realizing the at least one protocol mapping gateway node (111, 112, 121, 122, 133, 141, 151), causes the computer and/or the network node of the mobile communication network (100) to perform a method according one of claims 1 to 5.
